# NEUE EUROPÄISCHE PATENTSCHRIFT

(11) **EP 2 724 612 B3**
(45) Veröffentlichungstag dieser Patentschrift: **03.10.2018**
(45) Hinweis auf die Patenterteilung: 12.10.2016
(21) Anmeldenummer: 13190315.5
(22) Anmeldetag: 25.10.2013
(51) Int. Cl.: A01K 1/00, A01C 3/02, A01K 1/01

(54) **Stallgebäude für Nutztiere, insbesondere Hausschweine**
Stall house for livestock, in particular domestic pigs
Étable pour bétail, notamment pour porcs

(30) Priorität: 26.10.2012 DE 202012010262 U
(43) Veröffentlichungstag der Anmeldung: 30.04.2014
(73) Patentinhaber: A. G. Stalltechnik & Genetik GmbH, 26892 Heede / Ems (DE)
(72) Erfinder:
(74) Vertreter: Jabbusch, Matthias

(56) Entgegenhaltungen:
- EP-A1- 0 635 205
- EP-A1- 0 677 237
- WO-A1-86/07438
- DE-A1- 2 928 627
- DE-A1- 3 003 562
- DE-A1- 19 609 153
- US-A1- 2006 010 712

## Beschreibung

Die Erfindung betrifft ein Stallgebäude für Nutztiere, insbesondere Hausschweine, mit einem wenigstens eine Mistauffangplatte aufweisenden Mistkeller und einer Vielzahl über eine Zwischendecke vom Mistkeller getrennten Haltebuchten, in denen die Zwischendecke jeweils wenigstens einen Spaltboden aufweist, wobei der Mistauffangplatte wenigstens eine Räumeinrichtung sowie wenigstens eine Lüftungsanlage zugeordnet ist.

Bei derartigen Stallgebäuden handelt es sich regelmäßig um immissionsschutzrechtlich genehmigungsbedürftige Tierhaltungsanlagen nach der Bundes-Immissionsschutzverordnung. Wegen des in der Tierhaltung stattfindenden Strukturwandels mit immer größer werdenden Betriebseinheiten und der damit steigenden Umweltbelastung rückt der Immissionsschutz bei Stallbauvorhaben zunehmend in den Fokus des öffentlichen Interesses. Auch führten tier- und arbeitsschutzrechtliche Entwicklungen zur Einführung von Grenzwerten der in Stallgebäuden zulässigen Schwebstaub- und Ammoniakkonzentrationen. Die Folgen sind steigende Anforderungen an das Betreiben von Tierhaltungsanlagen, die sich zum Schutz vor schädlichen Umwelteinwirkungen aus dem Bundesemissionsschutzgesetz (BlmSchG) und den nachrangigen Verwaltungsvorschriften ableiten lassen. Auf Länderebene regeln Verwaltungsvorschriften und Erlasse weitere immissionsschutzrechtliche Aspekte wie den Schutz vor erheblichen Geruchsbelästigungen. Zur Einhaltung der eine sogenannte *"erhebliche Geruchsbelästigung"* ausmachenden Grenzwerte stehen der Stalltechnik unterschiedliche immissionsmindernde Maßnahmen zur Verfügung, die jedoch oftmals nicht ausreichend sind, um die Menschen naheliegender Wohngebiete sowie das vom Betreiber der Stallanlage eingesetzte Arbeitspersonal vor erheblichen Geruchsbelästigungen zuverlässig zu schützen. Eine besonders bekannte Maßnahme zur Erfüllung der immissionsschutzrechtlichen Anforderungen ist das Absaugen der mit Geruchsstoffen, Ammoniak und Stäuben beladenen Stallluft mittels Lüftungsanlagen. Bei diesen bestehen derzeitige Entwicklungsaktivitäten insbesondere in der Implementierung einzelner Abluftreinigungsstufen in der Verbesserung ihrer Reinigungsleistung sowie in der Herabsetzung des für eine konstante Reinigungsleistung erforderlichen Wartungsaufwandes.

Eine andere Maßnahme zur Verbesserung des Immissionsschutzes ist aus dänischen Stallgebäuden bekannt, bei denen der Mist auf der Mistauffangplatte gekühlt und die Mistauffangplatte mittels eines Faltschiebers in Intervallen geräumt wird. Diese Maßnahme ist jedoch insbesondere nicht für windschwache Binnenstandorte mit größeren Bevölkerungsdichten ausreichend.

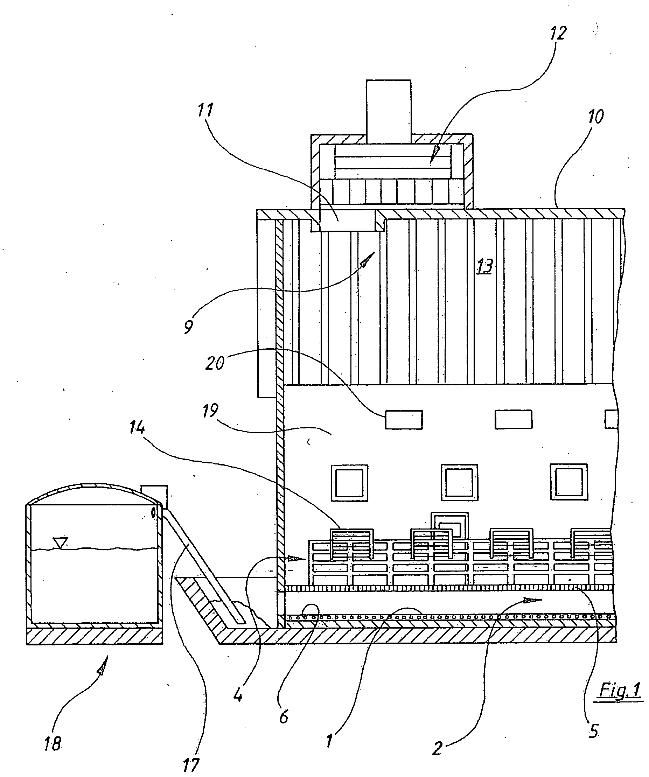

Als relevanter Stand der Technik wurde vom dänischen Umweltamt das BVT-Merkblatt "Køling af gyllen i svinestalde", zu Deutsch "Kühlung von Gülle in Schweineställen", vom 19.05.2009 gefunden, welches auf Seite 2 unter der Zwischenüberschrift "BESKRIVELSE", zu Deutsch "Beschreibung", die Eignung einer flüssigen Mistkühlung unter anderem für Ställe mit mechanischer Entmistung über einen Breitschieber beschreibt. Weiterhin wird der Einbau einer Güllekühlung über PEL-Schläuche beschrieben, die am Boden von Gülle- bzw. flüssigen Mistkanälen in den Stall eingegossen werden. Ein Hinweis auf das Vorhandensein einer Lüftungsanlage findet sich in den Erläuterungen zur Figur 1, wonach die Güllekühlanlage auch einen Wärmeübertrager "kalorifer" zur Nutzung der Abwärme des Stalls aufweist. Das Dokument WO 86/07438 A1 offenbart ebenfalls ein gattungsgemässes Stallgebäude. Die Dokumente DE 196 09 153 A1, EP 0 635 205 A1, EP 0 677 237 A1, DE 30 03 562 A1 und DE 29 28 627 A1 gehören auch zum Stand der Technick.

Der Erfindung liegt die Aufgabe zugrunde, ein Stallgebäude der eingangs genannten Gattung aufzuzeigen, mit welchem der Immissionsschutz bei gleichzeitig verringertem Wartungsaufwand signifikant verbessert ist.

Diese Aufgabe ist erfindungsgemäß durch die Merkmale des Schutzanspruches 1 gelöst. Vorteilhafte Weiterbildungen der Erfindung sind in den Unteransprüchen angegeben.

Das erfindungsgemäße Stallgebäude zeichnet sich dadurch aus, dass die Mistauffangplatte von Rohrleitungsschleifen durchlaufen ist, die an wenigstens ein Kühlaggregat angeschlossen sind, und dass die Lüftungsanlage wenigstens eine Abluftreinigungsstufe aufweist. Das Kühlaggregat in Verbindung mit der Räumeinrichtung dient dem Herunterkühlen des Mistes auf eine Temperatur, die das Ausgasen der Exkremente sowie bakterielle Zersetzungsaktivitäten im Mist hemmt bzw. nur in einem eingeschränkten Maße zulässt. Die Lüftungsanlage dient hingegen dem Austragen von Geruchsstoffen, Ammoniak und Stäuben aus dem Stallinneren sowie der Kühlung der Stallluft durch Austausch wärmerer Abluft gegen kühlere Frischluft. Die der Erfindung zugrunde liegende Aufgabe ist dabei durch die Kombination von Kühlaggregat, Räumeinrichtung und Lüftungsanlage gelöst. Aus dieser Kombination ergibt sich unerwarteter Weise ein doppelt positiver Effekt, nach welchem einerseits dem elektrischen Gebläse der Lüftungsanlage, wegen der emissionsmindernden Wirkung von Kühlaggregat und Räumeinrichtung, eine signifikant geringere Lüfterleistung abverlangt wird, und andererseits dem Kühlaggregat, wegen der kühlenden Wirkung der Lüftungsanlage, eine geringere Kühlleistung abverlangt wird. Mit diesem doppelt positiven Effekt wird vorteilhaft der Nachteil der bei dem erfindungsgemäßen Stallgebäude mit der Kombination von Kühlaggregat, Räumeinrichtung und Lüftungsanlage verbundenen Mehrkosten voll ausgeglichen. Das Kühlaggregat ist vorzugsweise Bestandteil einer Wärmerückgewinnungsanlage, mit welcher aus der Mistauffangplatte abgezogene Wärme zum partiellen Beheizen einzelner Stallbereiche, beispielsweise einzelner Ferkelnester genutzt werden kann.

Die Abluftreinigungsstufe dient dem Abscheiden von Geruchsstoffen, Ammoniak und Stäuben aus der in die freie Atmosphäre abzuführenden Stallluft, so dass die Luftqualität in der das Stallgebäude unmittelbar umgebenden Atmosphäre sowie in zum erfindungsgemäßen Stallgebäude naheliegenden Wohngebieten wesentlich verbessert ist. Die der Erfindung zugrunde liegenden Aufgabe ist hierbei durch die Kombination von Kühlaggregat, Räumeinrichtung und der eine Abluftreinigungsstufe aufweisenden Lüftungsanlage gelöst. Aus dieser Kombination ist dem doppelt positiv wirkenden Effekt hinzuzurechnen, dass auch dem Filter und/oder Wäscher der Abluftreinigungsstufe, wegen der emissionsmindernden Wirkung von Kühlaggregat und Räumeinrichtung, eine geringere Reinigungsleistung abverlangt wird.

Da die einer Räumeinrichtung eigene Arbeitsweise keinerlei Anforderungen bezüglich einer Fließ- und Pumpfähigkeit des im Mistkeller angesammelten Mistes stellt, wird vorgeschlagen, in den Haltebuchten jeweils wenigstens eine Rauhfutterraufe anzuordnen. Sowohl über verdautes als auch über unverdautes Rauhfutter in den Mistkeller gelangende Pflanzenfasern werden überaus zuverlässig und störungsfrei von der Räumeinrichtung erfasst und aus dem Mistkeller herausbefördert. Neben einer Erhöhung des Rauhfaseranteils im Nahrungsplan der Nutztiere dient das den Nutztieren über die Rauhfutterraufe angebotene Rauhfutter auch der Beschäftigung der Nutztiere, beispielsweise der Möglichkeit zur Auslebung ihres Wühltriebes.

Für eine besonders zuverlässige Handhabe des sich auf der Mistauffangplatte ansammelnden Mistes weist die Räumeinrichtung wenigstens einen an der Mistauffangplatte anstehenden Faltschieber auf. Faltschieber haben zwei klappbare Räumflügel, die bei einer Bewegungsrichtung zum Räumen der Mistauffangplatte auseinanderklappen und bei einer entgegengesetzten Bewegungsrichtung zusammenklappen. Der Faltschieber wird über einen Seilzug, eine hydraulisch bewegte Schiene oder eine Schnecke angetrieben. Selbstverständlich liegt es im Rahmen der Erfindung, wenn die Räumeinrichtung andere Faltschieberanlagen, beispielsweise einen Klappschieber, Kombischieber, Tretmistschieber oder auch einen Entmistungsroboter aufweist.

Um auch die Qualität der in den Haltebuchten befindlichen Stallluft sowohl für die Nutztiere, als auch für das im Stallgebäude arbeitende Personal weiter zu verbessern, wird nach einer besonders vorteilhaften Weiterbildung der Erfindung vorgeschlagen, dass die Lüftungsanlage über wenigstens einen Abluftkanal an einen offen über den Haltebuchten gelegenen Dachraum angeschlossen ist. Selbstverständlich gewährt die offene Lage durchaus eine beabstandete Anordnung einzelner Tragwerksteile, beispielsweise in Form einer Balkenoder Trägerprofillage.

Nach einer nächsten Weiterbildung der Erfindung ist der Mistkeller über die Räumeinrichtung und wenigstens einen Mistförderer an eine Biogasanlage angeschlossen, wobei die Biogasanlage über wenigstens eine Gasleitung an wenigstens ein Blockheizkraftwerk angeschlossen ist. Die Biogasanlage weist wenigstens einen Fermenter auf, in welchem der Mist von Mikroorganismen über Gülle zu Biogas und Gärresten umgewandelt wird. Die im Biogas chemisch gebundene Energie wird dann im Blockheizkraftwerk durch einen Verbrennungsprozess in elektrische Energie und Nutzwärme umgewandelt. Der Mistförderer ist beispielsweise ein Rohrschneckenförderer, dessen Schneckengehäuse die äußere Atmosphäre zuverlässig vor Emissionen aus den im Mist enthaltenen Exkrementen schützt.

Nach einer anderen Weiterbildung der Erfindung weist der Mistförderer wenigstens einen elektrischen Antrieb auf, der über ein Stromnetz an den Stromerzeuger des Blockheizkraftwerkes angeschlossen ist. Der elektrische Antrieb ist regelmäßig ein Elektromotor, der über eine Getriebeanordnung auf die Schneckenwelle des Rohrschneckenförderers aufgeschaltet ist. Mit dem Anschluss des elektrischen Antriebs an den Stromerzeuger des Blockheizkraftwerkes ist die Energiebilanz des erfindungsgemäßen Stallgebäudes nachhaltig verbessert. Das Stromnetz ist vorzugsweise ein mit dem öffentlichen Versorgungsnetz verbundenes Einspeisenetz.

Eine weitere Verbesserung der Energiebilanz ist dadurch erreicht, dass die Lüftungsanlage wenigstens ein elektrisches Gebläse aufweist, das ebenfalls über ein Stromnetz an den Stromerzeuger des Blockheizkraftwerkes angeschlossen ist.

Ein Ausführungsbeispiel der Erfindung, aus dem sich weitere erfinderische Merkmale ergeben, ist in der Zeichnung dargestellt. Es zeigen:
- Fig. 1:: eine Seitenansicht eines linken Abschnittes eines erfindungsgemäßen Stallgebäudes im Mittelschnitt; und

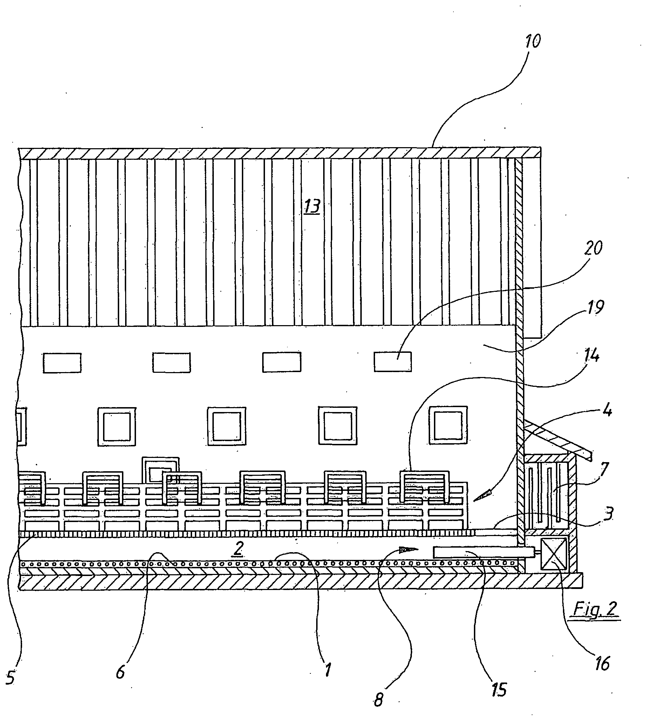

- Fig. 2:: eine Seitenansicht eines rechten Abschnittes des Stallgebäudes gemäß Fig. 1.

Das Stallgebäude hat einen eine Mistauffangplatte 1 aufweisenden Mistkeller 2 und eine Vielzahl über eine Zwischendecke 3 vom Mistkeller 2 getrennte Haltebuchten 4, in denen die Zwischendecke 3 jeweils einen Spaltboden 5 aufweist. Die Mistauffangplatte 1 ist von Rohrleitungsschleifen 6 durchlaufen, die an ein Kühlaggregat 7 angeschlossen sind. Der Mistauffangplatte 1 ist eine Räumeinrichtung 8 sowie eine Lüftungsanlage 9 zugeordnet. Die Lüftungsanlage 9 weist einen durch einen Dachfirst 10 des Stallgebäudes hindurchgeführten Abluftkanal 11 sowie mehrere im Abluftkanal 11 angeordnete Abluftreinigungsstufen 12 auf. Der vom Dachfirst 10 aus aufgespannte Dachraum 13 liegt offen über den Haltebuchten 4, in denen jeweils eine Rauhfutterraufe 14 angeordnet ist. Die Räumeinrichtung 8 weist einen an der Mistauffangplatte 1 anstehenden Faltschieber 15 mit einem Antriebsaggregat 16 auf. Über einen dem Faltschieber 15 zugeordneten Mistförderer 17 ist der Mistkeller 2 an eine Biogasanlage 18 angeschlossen. Dem Abluftkanal 11 der Lüftungsanlage 9 sind in den traufseitig gelegenen Gebäudewandungen 19 gleichmäßig verteilt angeordnete Lüftungsklappen 20 zugeordnet.

## Patentansprüche

1. Stallgebäude für Nutztiere, insbesondere Hausschweine, mit einem wenigstens eine Mistauffangplatte (1) aufweisenden Mistkeller (2) und einer Vielzahl über eine Zwischendecke vom Mistkeller getrennten Haltebuchten, (4) in denen die Zwischendecke (3) jeweils wenigstens einen Spaltboden (5) aufweist, wobei der Mistauffangplatte (1) wenigstens eine Räumeinrichtung (8) sowie wenigstens eine Lüftungsanlage (9) zugeordnet ist,
**dadurch gekennzeichnet,**
**dass** die Mistauffangplatte (1) von Rohrleitungsschleifen (6) durchlaufen ist, die an wenigstens ein Kühlaggregat (7) angeschlossen sind, und
**dass** die Lüftungsanlage (9) wenigstens eine Abluftreinigungsstufe (12) aufweist.

2. Stallgebäude nach Anspruch 1, **dadurch gekennzeichnet, dass** in den Haltebuchten (4) jeweils wenigstens eine Rauhfutterraufe (14) angeordnet ist.

3. Stallgebäude nach einem der Ansprüche 1 oder 2, **dadurch gekennzeichnet, dass** die Räumeinrichtung (8) wenigstens einen an der Mistauffangplatte (1) anstehenden Faltschieber (15) aufweist.

4. Stallgebäude nach einem der Ansprüche 1 bis 3, **dadurch gekennzeichnet, dass** die Lüftungsanlage (9) über wenigstens einen Abluftkanal (11) an einen offen über den Haltebuchten (4) gelegenen Dachraum (13) angeschlossen ist.

5. Stallgebäude nach einem der Ansprüche 1 bis 4, **dadurch gekennzeichnet, dass** der Mistkeller (2) über die Räumeinrichtung (8) und wenigstens einen Mistförderer (17) an eine Biogasanlage (18) angeschlossen ist, und dass die Biogasanlage (18) über wenigstens eine Gasleitung an wenigstens ein Blockheizkraftwerk angeschlossen ist.

6. Stallgebäude nach Anspruch 5, **dadurch gekennzeichnet, dass** der Mistförderer (17) wenigstens einen elektrischen Antrieb aufweist, der über ein Stromnetz an den Stromerzeuger des Blockheizkraftwerkes angeschlossen ist.

7. Stallgebäude nach Anspruch 5 oder 6, **dadurch gekennzeichnet, dass** die Lüftungsanlage (9) wenigstens ein elektrisches Gebläse aufweist, das über ein Stromnetz an den Stromerzeuger des Blockheizkraftwerkes angeschlossen ist.

## Claims

1. Stable building for livestock, in particular domestic pigs, comprising a manure cellar (2) having at least one manure collecting plate (1) and a plurality of holding bays (4) which are separated from the manure cellar by an intermediate ceiling and in which the intermediate ceiling (3) in each holding bay (4) at least has one slatted floor (5), wherein at least one scraper system (8) and at least one ventilation system (9) is associated with the manure collecting plate (1),
**characterized in**
**that** pipeline loops (6) run through the manure collecting plate (1), which pipeline loops are connected to at least one cooling unit (7) and
**that** the ventilation system (9) has at least one exhaust air purification stage (12).

2. The stable building according to claim 1, **characterized in that** at least one roughage rack (14) is arranged in each of the holding bays (4).

3. The stable building according to any one of claims 1 to 2, **characterized in that** the scraper system (8) has at least one folding slide (15) situated at the manure collecting plate (1).

4. The stable building according to any one of claims 1 to 3, **characterized in that** the ventilation system (9) is connected via at least one exhaust air duct (11) to an open roof space (13) located above the holding bays (4).

5. The stable building according to any one of claims 1 to 4, **characterized in that** the manure cellar (2) is connected to a biogas system (18) via the scraper system (8) and at least one manure conveyor (17) and that the biogas system (18) is connected to at least one cogeneration unit via at least one gas line.

6. The stable building according to claim 5, **characterized in that** the manure conveyor (17) has at least one electric drive which is connected to the power generator of the cogeneration unit via a power network.

7. The stable building according to claim 5 or 6, **characterized in that** the ventilation system (9) has at least one electric fan which is connected to the power generator of the cogeneration unit via a power network.

## Revendications

1. Étable pour du bétail, notamment pour des porcs domestiques, avec une cave à fumier (2) comportant au moins un plateau collecteur (1) de fumier et avec une pluralité d'emplacements de retenue (4) séparés de la cave à fumier par un plafond intermédiaire, dans lesquels le plafond intermédiaire (3) comporte chaque fois au moins un caillebotis (5), au plateau collecteur (1) de fumier étant associé au moins un dispositif de déblayage (8), ainsi qu'au moins un système d'aération (9),
**caractérisée en ce que**
le plateau collecteur (1) de fumier est traversé par des boucles de tuyauterie (6) qui sont raccordées sur au moins un groupe de refroidissement (7)et ca le système d'aération (9) comporte au moins une phase de traitement de l'air vicié (12).

2. Étable selon la revendication 1, **caractérisée en ce que** dans les emplacements de retenue (4) est chaque fois placé au moins un râtelier (14) pour fourrage grossier.

3. Étable selon l'une quelconque des revendications 1 à 2, **caractérisée en ce que** le dispositif de déblayage (8) comporte au moins un poussoir (15) repliable affleurant le plateau collecteur (1) de fumier.

4. Étable selon l'une quelconque des revendications 1 à 3, **caractérisée en ce que** par l'intermédiaire d'au moins une gaine d'évacuation d'air (11), le système d'aération (9) est raccordé sur un espace en toiture (13) situé en étant ouvert au-dessus des emplacements de retenue (4).

5. Étable selon l'une quelconque des revendications 1 à 4, **caractérisée en ce que** la cave à fumier (2) est raccordée par l'intermédiaire du dispositif de déblayage (8) et d'au moins un convoyeur à fumier (17) sur une installation de biogaz (18) et **en ce que** l'installation de biogaz (18) est raccordée par l'intermédiaire d'au moins un conduit à gaz sur au moins une installation de couplage chaleur-force compacte.

6. Étable selon la revendication 5, **caractérisée en ce que** le convoyeur à fumier (17) comporte au moins un entraînement électrique, qui par l'intermédiaire d'un réseau électrique est raccordé sur la génératrice d'électricité de l'installation de couplage chaleur-force.

7. Étable selon la revendication 5 ou la revendication 6, **caractérisée en ce que** le système d'aération (9) comporte au moins une soufflante électrique, qui par l'intermédiaire d'un réseau électrique est raccordée sur la génératrice d'électricité de l'installation de couplage chaleur-force.
